# EUROPEAN PATENT APPLICATION

(11) **EP 4 322 589 A1**
(43) Date of publication of application: **14.02.2024**
(21) Application number: 22819408.0
(22) Date of filing: 31.05.2022
(51) Int. Cl.: H04W 16/28

(54) **BEAM TIME SYNCHRONIZATION METHOD, TERMINAL DEVICE, AND ACCESS NETWORK DEVICE**

(30) Priority: 10.06.2021 CN 202110651230
(71) Applicant: Huawei Technologies Co., Ltd., Longgang Shenzhen, Guangdong 518129 (CN)
(72) Inventor: YUAN, Shitong, Shenzhen, Guangdong 518129 (CN); CHEN, Lei, Shenzhen, Guangdong 518129 (CN); ZHANG, Xi, Shenzhen, Guangdong 518129 (CN); FAN, Bo, Shenzhen, Guangdong 518129 (CN)
(74) Representative: Gill Jennings & Every LLP
(86) International application number: PCT/CN2022/096169
(87) International publication number: WO 2022/257810

(57) **Abstract**

Embodiments of this application disclose a beam time synchronization method, for a terminal device to report, to an access network device, that time synchronization information meets a preset condition. The method in embodiments of this application includes: The terminal device determines the time synchronization information based on a time synchronization value of a first beam and a time synchronization value of a second beam. The second beam is a candidate beam or a previous serving beam, and the first beam is a current serving beam. The terminal device sends indication information to the access network device if the time synchronization information meets the preset condition, where the indication information indicates that the time synchronization information meets the preset condition.

## Description

This application claims priority to Chinese Patent Application No. 202110651230.4, filed with the China National Intellectual Property Administration on June 10, 2021 and entitled "BEAM TIME SYNCHRONIZATION METHOD, TERMINAL DEVICE, AND ACCESS NETWORK DEVICE", which is incorporated herein by reference in its entirety.

### TECHNICAL FIELD

Embodiments of this application relate to the communication field, and specifically, to a beam time synchronization method, a terminal device, and an access network device.

### BACKGROUND

In a beam-based communication system, an access network device and a terminal device may transmit information through beams. A transmit beam is signal strength distribution formed in different spatial directions after a signal of the access network device is transmitted through an antenna. A receive beam is signal strength distribution in different spatial directions of a radio signal received by the terminal device through an antenna. Because distances between different terminal devices and one access network device are different, the different terminal devices need to transmit uplink transmission signals with different time advances. In this case, paths from all the terminal devices to the access network device are consistent. In other words, the uplink signals of the different terminal devices may simultaneously arrive at the access network device.

In a conventional beam time synchronization method, a terminal device usually determines, in an initial state, a downlink timing synchronization point based on a signal sent by an access network device. When the terminal device moves, the terminal device may calculate arrival time for a first path of the signal by using a time domain of a synchronization signal or a time domain of a tracking reference signal that is sent by the access network device, to determine a start position of a receive window to be used by the terminal device. Alternatively, the signal sent by the access network device carries an instruction that instructs the terminal to adjust uplink timing, and the terminal device adjusts the uplink timing based on the instruction. When the terminal device moves, the terminal device fine-tunes the uplink timing based on a timing adjustment signal sent by the access network device.

With the development of conventional wireless communication technologies, a beam width is increasingly narrow, and a difference between propagation paths of narrow beams is increasingly large. Consequently, a relatively large latency exists when a signal is propagated based on two different beams. When beam switching occurs, a downlink synchronization timing point may be shifted. Further, it is difficult for the terminal device to determine the downlink time synchronization point, resulting in downlink out-of-synchronization. In addition, when downlink out-of-synchronization occurs in the terminal device, it is difficult for the access network device to learn of downlink out-of-synchronization. This causes the access network device to fail to perform corresponding processing in time.

### SUMMARY

Embodiments of this application provide a beam time synchronization method, for a terminal device to report, to an access network device, that time synchronization information meets a preset condition.

According to a first aspect, an embodiment of this application provides a beam time synchronization method. According to the method, a terminal device reports, to an access network device, that beam timing exceeds a range. The method includes: The terminal device determines time synchronization information based on a time synchronization value of a first beam and a time synchronization value of a second beam. The second beam is a candidate beam or a previous serving beam, and the first beam is a current serving beam. The terminal device sends indication information to the access network device if the time synchronization information meets a preset condition. The indication information indicates that the time synchronization information meets the preset condition.

In this possible implementation, the terminal device first obtains the time synchronization value of each of the first beam and the second beam, to determine that the time synchronization information meets the preset condition. Then, the terminal device sends the indication information to the access network device. Because the terminal may actively notify the access network device that the time synchronization information meets the preset condition, the access network device can learn of a time point at which the time synchronization information of the terminal device meets the preset condition. In this way, the access network device can perform corresponding processing to avoid disconnection between the terminal device and the access network device.

In a possible implementation of the first aspect, the second beam is the candidate beam, and that the terminal device sends indication information to the access network device if the time synchronization information meets a preset condition includes: If the second beam is a beam with highest reference signal received power RSRP or a highest signal to interference plus noise ratio SINR in a candidate beam set, and the time synchronization value of the second beam meets the preset condition, the terminal device reports, to the access network device, that "the time synchronization value of the second beam meets the preset condition".

In this possible implementation, if the second beam is the candidate beam, the method in which the terminal device determines that the time synchronization information meets the preset condition is specifically provided, improving possibility to implement this embodiment of this application.

In a possible implementation of the first aspect, the second beam is the previous serving beam, and that the terminal device sends indication information to the access network device if the time synchronization information is greater than a preset value includes: If the first beam is a beam with highest RSRP or a highest SINR in a beam set, and the time synchronization value of the first beam meets the preset condition, the terminal device reports, to the access network device, that the time synchronization value of the first beam meets the preset condition.

In this possible implementation, if the second beam is the previous serving beam, the method in which the terminal device determines that the time synchronization information meets the preset condition is specifically provided, improving possibility to implement this embodiment of this application.

In a possible implementation of the first aspect, before the terminal device determines the time synchronization information based on the time synchronization value of the first beam and the time synchronization value of the second beam, the method further includes: The terminal device receives a tracking reference signal TRS resource preconfigured by the access network device. The TRS resource includes a plurality of reference signals corresponding to one or more beams.

In a possible implementation of the first aspect, that the terminal device sends indication information to the access network device if the time synchronization information meets a preset condition includes: If a time synchronization value of at least one of the plurality of beams corresponding to the plurality of reference signals meets the preset condition, the terminal device sends the indication information to the access network device. The indication information includes a reference signal index corresponding to the at least one beam.

In a possible implementation of the first aspect, the reference signal index includes a reportConfig ID of at least one reference signal or an ID of the at least one reference signal.

In a possible implementation of the first aspect, that the terminal device sends indication information to the access network device if the time synchronization information meets a preset condition includes: If a difference between time synchronization values of two of the plurality of beams corresponding to the plurality of reference signals meets the preset condition, the terminal device sends the indication information to the access network device. The indication information includes identifiers of the two beams or the difference between the time synchronization values.

In a possible implementation of the first aspect, the indication information further indicates the access network device to send an adjustment signal to the terminal device. The adjustment signal includes a target TRS, and the target TRS is a TRS resource location that is determined by the access network device by adding a preset offset value to a TRS in frequency domain in the TRS resource.

In this possible implementation, the method in which the access network device reconfigures the TRS resource for the terminal device is specifically provided. This ensures the implementation method in which the access network device configures the TRS resource for the terminal device when the time synchronization information meets the preset condition, improving implementability of this solution.

In a possible implementation of the first aspect, before the terminal device determines the time synchronization information based on the time synchronization value of the first beam and the time synchronization value of the second beam, the method further includes: The terminal device receives a switching signal sent by the access network device. The switching signal indicates the terminal device to switch from the first beam to the candidate beam or from the previous serving beam to the first beam.

In a possible implementation of the first aspect, the second beam is the candidate beam, and that the terminal device sends indication information to the access network device includes: The terminal device sends the indication information to the access network device by using a UCI resource preconfigured for the access network device, or the terminal device sends the indication information to the access network device by using a MAC-CE.

In a possible implementation of the first aspect, the second beam is the previous serving beam and that the terminal device sends indication information to the access network device includes: The terminal device sends the indication information to the access network device by using a dedicated random resource preconfigured for the access network device.

According to a second aspect, an embodiment of this application provides a beam time synchronization method. According to the method, a terminal device reports, to an access network device, that beam timing exceeds a range. The method includes: The terminal device determines a time synchronization offset value based on a time synchronization value of a first beam and a time synchronization value of a second beam. The second beam is a candidate beam or a previous serving beam, and the first beam is a current serving beam. The terminal device determines a timing advance value based on the time synchronization offset value. The terminal device sends indication information to the access network device, where the indication information includes the timing advance value.

In this possible implementation, the terminal determines the time synchronization offset value based on the time synchronization value of the first beam and the time synchronization value of the second beam. Then, the terminal sends the indication information including the timing advance value to the access network device. In this way, timing advance is not out of synchronization after the terminal switches the beam, and an adjustment method supported by a timing advance command is not exceeded.

In a possible implementation of the second aspect, that the terminal device determines a time synchronization offset value based on a time synchronization value of a first beam and a time synchronization value of a second beam includes: The terminal device determines that a difference between the time synchronization value of the first beam and the time synchronization value of the second beam is the time synchronization offset value; or determine that a difference between arrival time for first paths of two reference signals corresponding to the first beam and the second beam is the time synchronization offset value.

In a possible implementation of the second aspect, the second beam is the candidate beam, and that the terminal device determines a target uplink timing based on the time synchronization offset value includes: The terminal device determines that a sum of the time synchronization offset value and downlink timing of the first beam is the timing advance value.

In a possible implementation of the second aspect, the second beam is the previous serving beam, and that the terminal device determines a timing advance value based on the time synchronization offset value includes: The terminal device determines that a sum of the time synchronization offset value and downlink timing of the previous serving beam is the timing advance value.

A third aspect of this application provides a terminal device. The terminal device has a function of performing the method according to the first aspect or any one of the possible implementations of the first aspect. The function may be implemented by hardware, or by hardware executing corresponding software. The hardware or the software includes one or more modules corresponding to the foregoing functions, such as a determining module.

A fourth aspect of this application provides a terminal device. The terminal device has a function of performing the method according to the second aspect or any one of the possible implementations of the second aspect. The function may be implemented by hardware, or by hardware executing corresponding software. The hardware or the software includes one or more modules corresponding to the foregoing functions, such as a sending module.

A fifth aspect of this application provides a terminal device. The terminal device includes at least one processor, a memory, an input/output (input/output, I/O) interface, and computer-executable instructions that are stored in the memory and that can run on the processor. When the computer-executable instructions are executed by the processor, the processor performs the method according to the first aspect or any one of the possible implementations of the first aspect.

A sixth aspect of this application provides a terminal device. The terminal device includes at least one processor, a memory, an input/output (input/output, I/O) interface, and computer-executable instructions that are stored in the memory and that can run on the processor. When the computer-executable instructions are executed by the processor, the processor performs the method according to the second aspect or any one of the possible implementations of the second aspect.

According to a seventh aspect, this application provides a computer-readable storage medium storing one or more computer-executable instructions. When executing the computer-executable instructions, a processor performs the method according to the first aspect or any one of the possible implementations of the first aspect.

According to an eighth aspect, this application provides a computer-readable storage medium storing one or more computer-executable instructions. When executing the computer-executable instructions, a processor performs the method according to the second aspect or any one of the possible implementations of the second aspect.

According to a ninth aspect, this application provides a computer program product storing one or more computer-executable instructions. When executing the computer-executable instructions, a processor performs the method according to the first aspect or any one of the possible implementations of the first aspect.

According to a tenth aspect, this application provides a computer program product storing one or more computer-executable instructions. When executing the computer-executable instructions, a processor performs the method according to the second aspect or any one of the possible implementations of the second aspect.

According to an eleventh aspect, this application provides a chip system. The chip system includes at least one processor, and the at least one processor is configured to implement a function in the first aspect or any one of the possible implementations of the first aspect. In a possible design, the chip system may further include a memory. The memory is configured to store program instructions and data that are necessary for an apparatus to process an artificial intelligence model. The chip system may include a chip, or may include a chip and another discrete component.

According to a twelfth aspect, this application provides a chip system. The chip system includes at least one processor, and the at least one processor is configured to implement a function in the second aspect or any one of the possible implementations of the second aspect. In a possible design, the chip system may further include a memory. The memory is configured to store program instructions and data that are necessary for a data processing apparatus based on an artificial intelligence model. The chip system may include a chip, or may include a chip and another discrete component.

It can be learned from the foregoing technical solutions that embodiments of this application have the following advantages:

In embodiments of this application, the terminal device first obtains the time synchronization value of each of the first beam and the second beam, to determine that the time synchronization information meets the preset condition. Then, the terminal device sends the indication information to the access network device. Because the terminal may actively notify the access network device that the time synchronization information meets the preset condition, the access network device can learn of the time point at which the time synchronization information of the terminal device meets the preset condition. In this way, the access network device can perform corresponding processing to avoid the disconnection between the terminal device and the access network device.

### BRIEF DESCRIPTION OF DRAWINGS

FIG. 1 is a diagram of a network architecture of a beam-based communication system;
FIG. 2 is a schematic flowchart of a beam-based communication system;
FIG. 3 is a schematic diagram of a scenario of a beam-based communication system;
FIG. 4 is a schematic diagram of a structure of a beam-based communication system;
FIG. 5 is a schematic flowchart of beam time synchronization according to an embodiment of this application;
FIG. 6 is another schematic flowchart of beam time synchronization according to an embodiment of this application;
FIG. 7 is another schematic flowchart of beam time synchronization according to an embodiment of this application;
FIG. 8 is a schematic diagram of a structure of a terminal device according to an embodiment of this application;
FIG. 9 is another schematic diagram of a structure of a terminal device according to an embodiment of this application;
FIG. 10 is another schematic diagram of a structure of a terminal device according to an embodiment of this application;
FIG. 11 is another schematic diagram of a structure of a terminal device according to an embodiment of this application; and
FIG. 12 is another schematic diagram of a structure of a beam-based communication system according to an embodiment of this application.

### DESCRIPTION OF EMBODIMENTS

An embodiment of this application provides a beam time synchronization method, for a terminal device to report, to an access network device, that time synchronization information meets a preset condition.

The following describes embodiments of this application with reference to accompanying drawings. It is clear that the described embodiments are only some but not all of embodiments of this application. A person of ordinary skill in the art may learn that, with development of technologies and emergence of a new scenario, technical solutions provided in embodiments of this application are also applicable to a similar technical problem.

In this specification, claims, and accompanying drawings of this application, terms "first", "second", and the like are intended to distinguish similar objects but do not necessarily indicate a specific order or sequence. It should be understood that data termed in such a manner are interchangeable in proper circumstances, so that embodiments described herein may be implemented in an order other than the order illustrated or described herein. In addition, the terms "include", "contain" and any other variants mean to cover the non-exclusive inclusion, for example, a process, method, system, product, or device that includes a series of steps or modules is not necessarily limited to those steps or modules, but may include another step or module that is not expressly illustrated or that is inherent to the process, method, system, product, or device.

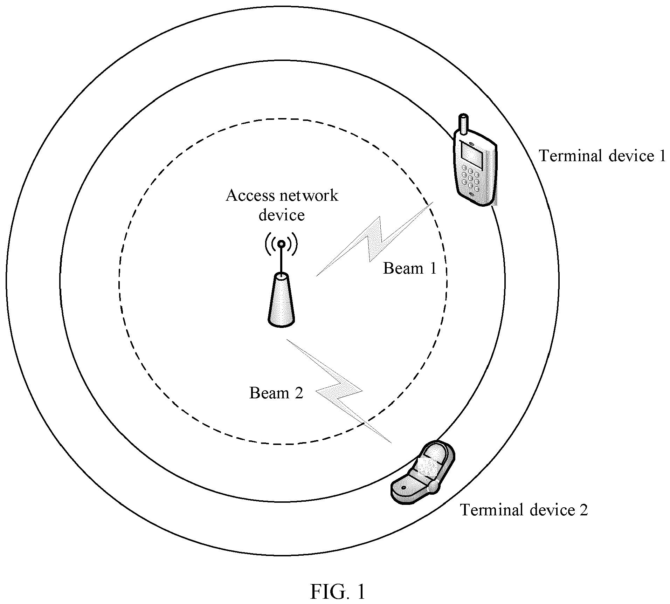

Refer to FIG. 1. A beam is a communication resource, and different beams may be considered as different resources. The beam may be a wide beam, a narrow beam, or a beam of another type. In a beam-based communication system, an access network device and a terminal device may transmit information through beams. A transmit beam is signal strength distribution formed in different spatial directions after a signal of the access network device is transmitted through an antenna. A receive beam is signal strength distribution in different spatial directions of a radio signal received by the terminal device from the antenna. When a low frequency band or an intermediate frequency band is used, a signal may be sent omnidirectionally or a signal may be sent at a relatively wide angle. However, when a high frequency band is used, because a high frequency communication system has a relatively small carrier wavelength, an antenna array formed by a plurality of antenna elements may be disposed at each of a transmitting end and a receiving end. The transmitting end sends a signal with a specific beamforming weight, so that the sent signal forms a beam with spatial directivity. In addition, the receiving end receives the signal with a specific beamforming weight by using the antenna array, so that receive power of the signal at the receiving end can be increased, and a transmission path loss can be reduced. As shown in FIG. 1, the access network device may respectively send a signal to a terminal device 1 and a terminal device 2 by using a beam 1 and a beam 2 that have the spatial directivity.

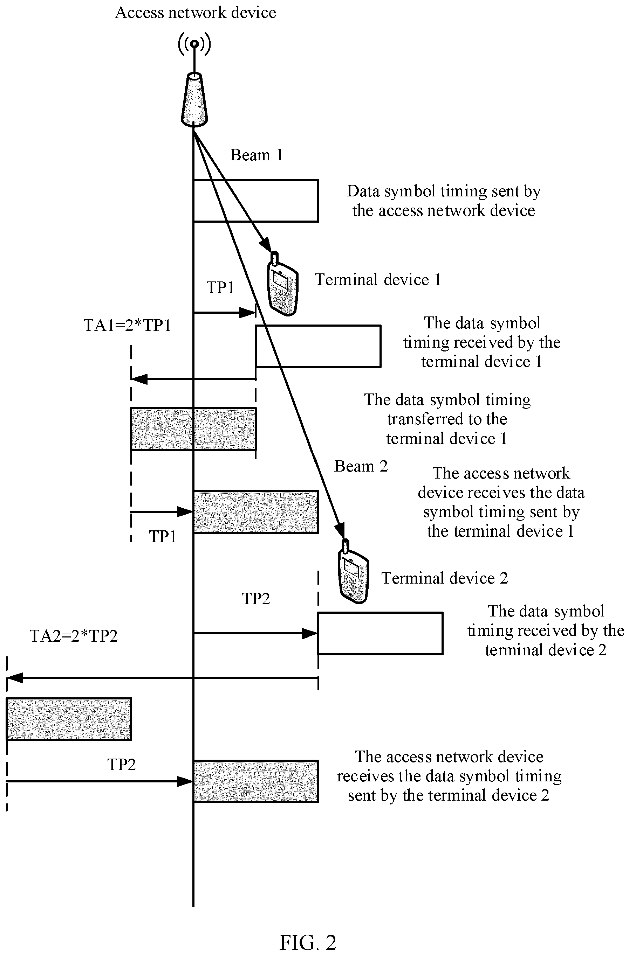

Refer to FIG. 2. Because distances between different terminal devices and a same access network device are different, the different terminal devices need to transmit uplink transmission signals with different time advances. In other words, the different terminal devices determine different time synchronization values, namely downlink timing. In this case, paths from all the terminal devices to the access network device are consistent. In other words, uplink signals of the different terminal devices may simultaneously arrive at the access network device. This can effectively avoid interference between users, and help the access network device demodulate data. Therefore, the access network device sends a timing advance value (Timing Advance, TA), namely uplink timing, to user equipment (User equipment, UE), namely the terminal device, so that the UE adjusts uplink transmission. To be specific, the UE sends the uplink signal in advance based on a command transmitted through a physical uplink shared channel (Physical uplink shared channel, PUSCH), a physical uplink control channel (Physical uplink control channel, PUCCH), and an uplink sounding reference signal (Sounding reference signal, SRS). The access network device may send a timing advance command (Timing Advance Command, TAC) to the terminal device through a random access response (random access response, RAR). The TAC indicates a value of a time advance of uplink transmission performed by the UE. The access network device may continuously adjust the timing advance value by using a medium access layer-control element (Medium Access Control-Control element, MAC-CE). For example, as shown in FIG. 2, a base station needs to send different TA values to two terminal devices at different locations. To be specific, TA1 of a terminal device 1 is equal to 2*TP1, TA2 of a terminal device 2 is equal to 2*TP2, and TP is a signal propagation delay. In this case, uplink signals of the two terminal devices at different locations simultaneously arrive at the base station.

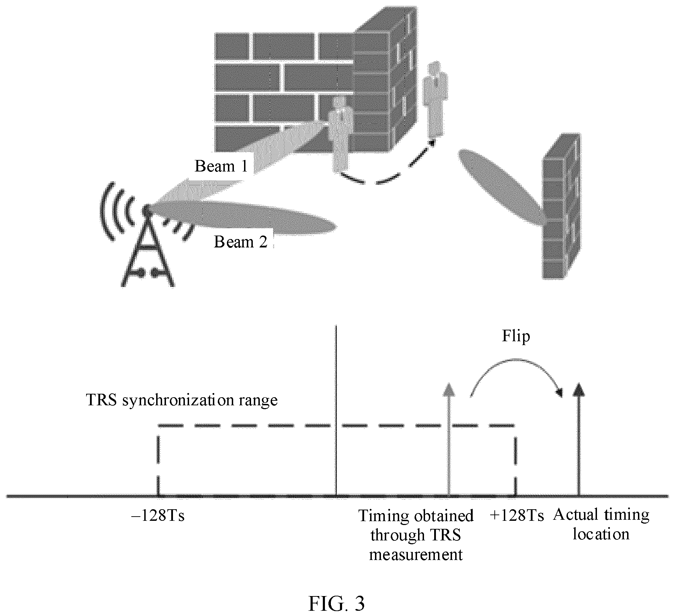

Refer to FIG. 3. In a conventional beam time synchronization method, a terminal device usually determines, in an initial state, a downlink timing synchronization point based on a signal sent by an access network device. When the terminal device moves, the terminal device may calculate arrival time for a first path of the signal by using time domain of a synchronization signal or a time domain of a tracking reference signal sent by the access network device, to determine a start position of a receive window to be used by the terminal device. Alternatively, the signal sent by the access network device carries an instruction that instructs the terminal device to adjust uplink timing, and the terminal device adjusts the uplink timing based on the instruction. When the terminal device moves, the terminal device fine-tunes the uplink timing based on a timing adjustment signal sent by the access network device. However, when beams are relatively narrow, in some cases, transmission paths of signals transmitted based on two different beams may differ greatly. For example, as shown in FIG. 2, due to a feature of a time domain cyclic shift of a complex signal and a difference between a direct beam and a reflected beam and, when a serving beam of a moving terminal device is switched from a beam 1 to a beam 2 and a sampling window is excessively small, a first path position of a time domain is flipped. Consequently, the UE cannot obtain an actual downlink timing position by measuring. When the terminal device receives data based on incorrect downlink timing, a demodulation failure occurs. It is difficult for the terminal device to determine an uplink time synchronization point for a new TRS-based beam, and the user is out of uplink synchronization.

The access network device in this embodiment of this application is an apparatus that is deployed in a radio access network to provide a wireless communication function for the terminal device. The access network device may include a macro base station, a micro base station, namely, a small cell, a relay station, an access point, and the like in various forms. In systems using different radio access technologies, access network devices may have different names, such as a base transceiver station (Base Transceiver Station, BTS) in a global system for mobile communication (Global System for Mobile Communication, GSM) or a code division multiple access (Code Division Multiple Access, CDMA) network, a NB (NodeB) in wideband code division multiple access (Wideband Code Division Multiple Access, WCDMA), and an eNB or an eNodeB (Evolutional NodeB) in long term evolution (Long Term Evolution, LTE). Alternatively, the access network device may be a radio controller in a cloud radio access network (Cloud Radio Access Network, CRAN) scenario. Alternatively, the access network device may be a base station device in a 5G network or an access network device in a future evolved PLMN network. Alternatively, the access network device may be a wearable device, or a vehicle-mounted device. Alternatively, the access network device may be a transmission and reception point (Transmission and Reception Point, TRP).

The terminal device in this embodiment of this application may include various handheld devices, vehicle-mounted devices, wearable devices, or computing devices that have the wireless communication function, or other processing devices connected to a wireless modem. The terminal device may be a mobile station (Mobile Station, MS), a subscriber unit (subscriber unit), a cellular phone (cellular phone), a smart phone (smart phone), a wireless data card, a personal digital assistant (Personal Digital Assistant, PDA for short) computer, a tablet computer, a wireless modem (modem), a handheld device (handset), a laptop computer (laptop computer), a machine type communication (Machine Type Communication, MTC) device, or the like.

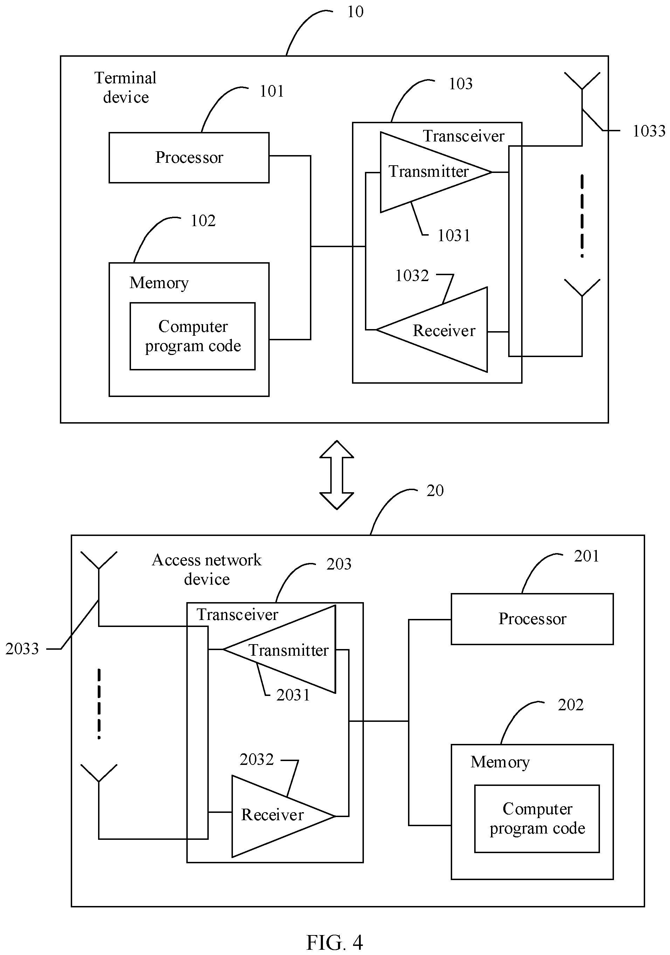

As shown in FIG. 4, a terminal device 10 includes a processor 101, a memory 102, and a transceiver 103. The transceiver 103 includes a transmitter 1031, a receiver 1032, and an antenna 1033. An access network device 20 includes a processor 201, a memory 202, and a transceiver 203. The transceiver 203 includes a transmitter 2031, a receiver 2032, and an antenna 2033. The receiver 1032 may be configured to receive transmission control information through the antenna 1033. The transmitter 1031 may be configured to send transmission feedback information to the access network device 20 through the antenna 1033. The transmitter 2031 may be configured to send the transmission control information to the terminal device 10 through the antenna 2033. The receiver 2032 may be configured to receive, through the antenna 2033, the transmission feedback information sent by the terminal device 10.

Based on the foregoing beam-based communication network, the following describes a beam time synchronization method in an embodiment of this application.

In this embodiment of this application, a terminal device may report, to an access network device, that time synchronization information of a serving beam meets a preset condition after detecting that the time synchronization information of the serving beam meets the preset condition. Details are described below.

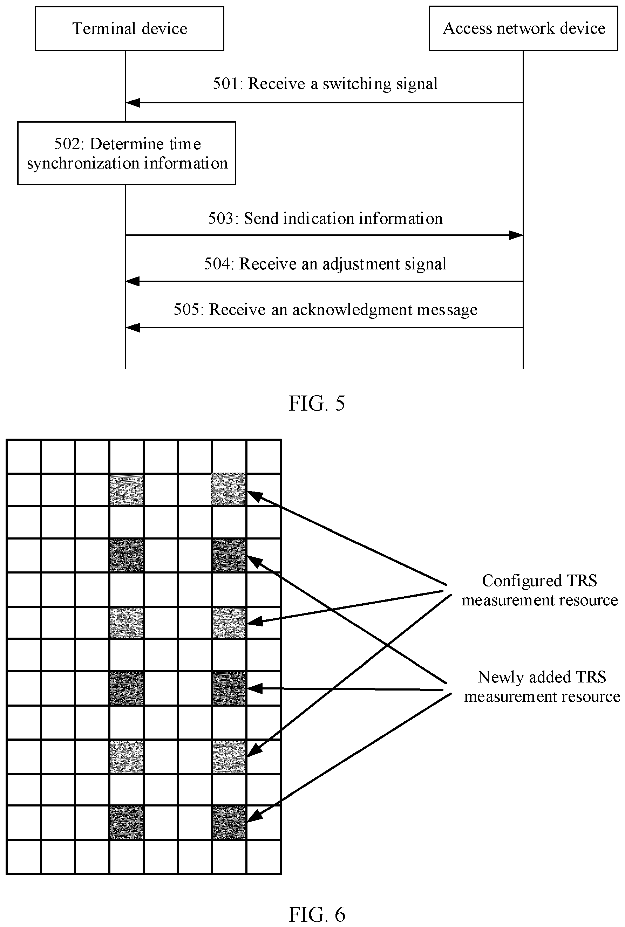

Refer to FIG. 5. A procedure of the beam time synchronization method according to this embodiment of this application includes the following steps.

501: A terminal device receives a switching signal of an access network device.

The terminal device receives the switching signal sent by the access network device, where the switching signal indicates the terminal device to switch a serving beam. The serving beam in this embodiment of this application is a beam used by the terminal device to detect a physical downlink control channel (Physical Downlink Control Channel, PDCCH), or an activated beam or an indicated beam corresponding to a CORESET (control resource set) resource of the terminal device.

Specifically, the switching signal may indicate the terminal device to switch from a first beam to a candidate beam, in other words, switch from a current serving beam to the candidate serving beam; or may indicate the terminal device to switch from a previous serving beam to a first beam. This is not specifically limited herein.

In this embodiment of this application, the terminal device may switch the serving beam based on the switching signal sent by the access network device. In addition, when an original serving beam does not meet a requirement of the terminal device, the terminal device may switch the beam, and then send corresponding indication information to the access network device. The indication information indicates that the terminal device switches the serving beam, so that the access network device performs corresponding adjustment. This is not specifically limited herein.

502: The terminal device determines time synchronization information.

The terminal device determines the time synchronization information based on a time synchronization value of the first beam and a time synchronization value of a second beam. The time synchronization information is used by the terminal device to determine whether the terminal device needs to send the indication information to the access network device. The first beam is the current serving beam, and the second beam may be the previous serving beam, or may be a next candidate serving beam, namely the candidate beam.

In this embodiment of this application, that the terminal device determines the time synchronization information based on a time synchronization value of the first beam and a time synchronization value of a second beam may be: The terminal device determines that the time synchronization value of the first beam is the time synchronization information; or the terminal device determines that the time synchronization value of the candidate beam is the time synchronization information; or the terminal device determines a time synchronization offset value based on the time synchronization value of the first beam and the time synchronization value of the previous serving beam, where the timing offset value is the time synchronization information; or the terminal device determines the time synchronization offset value based on the time synchronization value of the first beam and the time synchronization value of the candidate beam, where the time synchronization offset value is the time synchronization information. This is not specifically limited herein.

In this embodiment of this application, the timing offset value may be a difference between time synchronization values of two beams, or may be a difference between arrival time for first paths of reference signals corresponding to the two beams.

503: The terminal device sends the indication information to the access network device.

If the time synchronization information meets a preset condition, the terminal device sends the indication information to the access network device. The indication information indicates that the time synchronization information meets the preset condition.

In an optional implementation, when the second beam is the candidate beam, if a difference between the time synchronization value of the second beam and the time synchronization value of the current serving first beam in the terminal device is greater than a preset value, that is, exceeds an adjustment range, and the second beam is a beam with highest reference signal received power (Reference Signal Received Power, RSRP) or a highest signal to interference plus noise ratio (Signal to Interference plus Noise Ratio, SINR) in a candidate beam set, the terminal device sends the indication information to the access network device. The indication information indicates that the difference between the time synchronization value of the candidate beam and the time synchronization value of the current serving first beam in the terminal device is greater than the preset value, that is, exceeds the adjustment range. The indication information may include the time synchronization value of the candidate beam.

In an optional implementation, when a difference between the time synchronization value of the current serving first beam and the previous serving beam in the terminal device is greater than the preset value, that is, exceeds the adjustment range, and the first beam is a beam with highest reference signal received power (Reference Signal Received Power, RSRP) or a highest signal to interference plus noise ratio (Signal to Interference plus Noise Ratio, SINR) in a beam set, the terminal device sends the indication information to the access network device. The indication information indicates that the time synchronization value of the first beam is greater than the preset value, and the indication information may include the time synchronization value of the first beam.

In an optional implementation, the time synchronization information is the timing offset value. If the timing offset value is greater than the preset value, the terminal device sends the indication information to the access network device. The indication information indicates that the timing offset value is greater than the preset value, and may include the timing offset value.

In this embodiment of this application, when the time synchronization information is the time synchronization offset value, the terminal device sends the indication information to the access network device after determining that the time synchronization offset value meets the preset condition. In addition, the terminal device may alternatively directly send the indication information to the access network device without determining whether the preset condition is met. The indication information may include the timing offset value. This is not specifically limited herein.

In this embodiment of this application, if the terminal device has a tracking reference signal (tracking reference signal, TRS) resource preconfigured by the access network device, a plurality of TRS resources include a plurality of reference signals that are in a one-to-one correspondence with a plurality of beams, and a time synchronization value of at least one of the plurality of beams corresponding to the plurality of reference signals is greater than the preset value, the terminal device sends the indication information to the access network device. The indication information may further include a reportConfig ID, a reportConfig ID pair, or an ID of the corresponding reference signal.

In this embodiment of this application, if the terminal device has the tracking reference signal (tracking reference signal, TRS) resource preconfigured by the access network device, the TRS resource includes the plurality of reference signals corresponding to the beam, and time synchronization values of two of the plurality of beams corresponding to the plurality of reference signals are greater than the preset value, the terminal device sends the indication information to the access network device. The indication information may further include the two beams and a difference between the corresponding time synchronization values.

In this embodiment of this application, if the second beam is the candidate beam, the terminal device may send the indication information to the access network device by using a UCI resource preconfigured for the access network device, or the terminal device may send the indication information to the access network device by using a MAC-CE. This is not specifically limited herein.

In this embodiment of this application, if the second beam is the previous serving beam, the terminal device may send the indication information to the access network device by using a dedicated random resource preconfigured for the access network device. This is not specifically limited herein.

504: The terminal device receives an adjustment signal sent by the access network device.

The terminal device receives the adjustment signal sent by the access network device. The adjustment signal may indicate an event that the access network device learns that the time synchronization information of the serving beam meets the preset condition.

In addition, the adjustment signal that is received by the terminal device and sent by the access network device may further include a target TRS. The target TRS is a TRS resource location that is determined by the access network device by adding a preset offset value to a TRS in frequency domain in the TRS resource.

As shown in FIG. 6, in a possible implementation, in this embodiment of this application, if the terminal device has the tracking reference signal (tracking reference signal, TRS) resource preconfigured by the access network device, the plurality of TRS resources include the plurality of reference signals corresponding to the beam, and the time synchronization information meets the preset condition, the access network device generates the target TRS by adding the preset offset value to an original TRS in frequency domain in the TRS resource. Correspondingly, when the terminal device sends the indication information to the access network device, the indication information further indicates the access network device to send the target TRS to the terminal device, that is, the access network device configures a new TRS resource for the terminal device. The TRS resource may be in a preset or preconfigured slot, and the TRS resource may follow the preset or preconfigured time.

Specifically, as shown in FIG. 6, the access network device preconfigures one additional aperiodic TRS resource for the terminal device. The TRS resource is a signaling-based resource. To be specific, the TRS resource is associated with the indication information sent by the terminal device to the access network device. The terminal device sends the indication information to the access network device if the time synchronization information meets the preset condition. The indication information further indicates the access network device to configure the new TRS resource for the terminal device. The access network device may add one frequency domain offset value to an ID corresponding to the configured TRS resource based on the indication information sent by the terminal device. For example, an offset of two subcarriers or two resource elements (resource elements, REs) indicates a group of new TRS resources. Then, the terminal device performs joint processing on a plurality of groups of TRS resources on a same time domain OFDM symbol. The plurality of groups of TRS resources include the configured TRS and the newly configured TRS. After the terminal device sends the indication information to the access network device, the indication information indicates the access network device to configure the new TRS resource for the terminal device. The terminal device may learn that the TRS resource may be sent after x slots or y milliseconds, that is, the newly added TRS may be measured after the x slots or y milliseconds, x and y may be predefined or preconfigured values.

505: The terminal device receives an acknowledgment message.

The terminal device receives the acknowledgment message sent by the access network device. The acknowledgment message indicates the terminal device to measure the newly added TRS resource.

In a possible implementation, if the terminal device has the tracking reference signal (tracking reference signal, TRS) resource preconfigured by the access network device, and the indication information further indicates the access network device to configure the new TRS resource for the terminal device after the access network device receives the indication information sent by the terminal device, the access network device may add the frequency domain offset value to the ID corresponding to the configured TRS resource based on the indication information sent by the terminal device. For example, offset the two subcarriers or the two resource elements (resource elements, REs), to indicate the group of new TRS resources. Then, the terminal device performs joint processing on the plurality of groups of TRS resources on the same time domain OFDM symbol. The plurality of groups of TRS resources include the configured TRS and the newly configured TRS. Then, the access network device sends the acknowledgment ACK message to the terminal device. The acknowledgment message includes information related to the configured TRS and the newly configured TRS. The acknowledgment message indicates that the access network device may send the TRS resource after x slots or y milliseconds, x and y may be the predefined or preconfigured values.

Correspondingly, after receiving the acknowledgment message sent by the access network device, the terminal device determines the information related to the configured TRS and the newly configured TRS based on the acknowledgment message, and then measures the newly added TRS resource. Specifically, the terminal device may learn that the TRS resource is sent after the x slots or y milliseconds, that is, the newly added TRS may be measured after the x slots or y milliseconds, x and y may be the predefined or preconfigured values.

In this embodiment of this application, step 504 is first performed, and then step 505 is performed. Alternatively, step 505 may be first performed, and then step 504 is performed. Alternatively, step 505 may not be performed, and only step 504 is performed. This is not specifically limited herein.

In this embodiment of this application, the terminal device may report, to the access network device, that the time synchronization information of the serving beam meets the preset condition after detecting that the time synchronization information of the serving beam meets the preset condition. The access network device may adjust a timing advance value based on the time synchronization information. Details are described below.

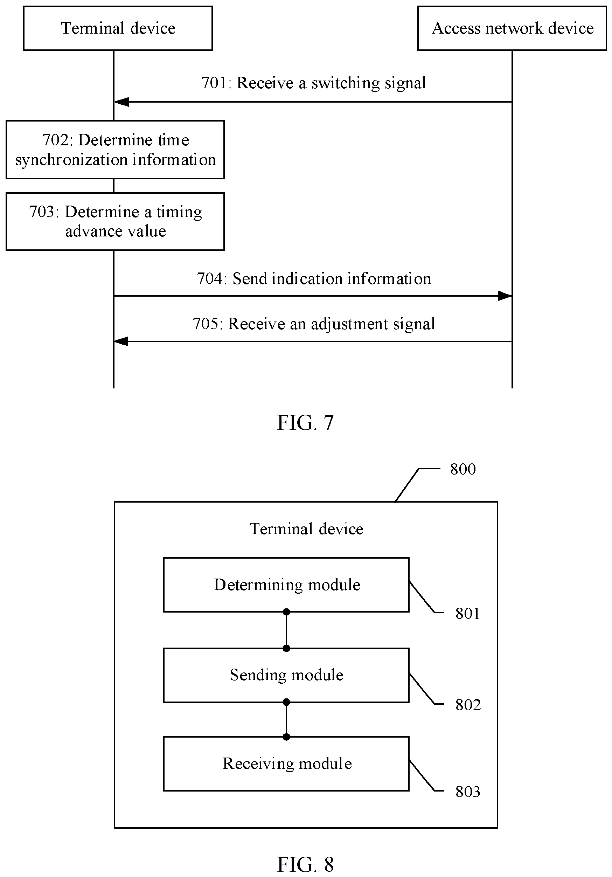

Refer to FIG. 7. A procedure of the beam time synchronization method according to this embodiment of this application includes the following steps.

701: A terminal device receives a switching signal of an access network device.

The terminal device receives the switching signal sent by the access network device, where the switching signal indicates the terminal device to switch a serving beam.

Specifically, the switching signal may indicate the terminal device to switch from a first beam to a candidate beam, in other words, switch from a current serving beam to the candidate serving beam; or may indicate the terminal device to switch from a previous serving beam to a first beam. This is not specifically limited herein.

In this embodiment of this application, the terminal device may switch the serving beam based on the switching signal sent by the access network device. In addition, when an original serving beam does not meet a requirement of the terminal device, the access network device may switch the beam. This is not specifically limited herein.

702: The terminal device determines time synchronization information.

The terminal device determines the time synchronization information based on a time synchronization value of the first beam and a time synchronization value of a second beam. The time synchronization information is used by the terminal device to determine whether the terminal device needs to send the indication information to the access network device. The first beam is the current serving beam, and the second beam may be the previous serving beam, or may be a next candidate serving beam, namely the candidate beam.

In this embodiment of this application, that the terminal device determines the time synchronization information based on a time synchronization value of the first beam and a time synchronization value of a second beam may be: The terminal device determines that the time synchronization value of the first beam is the time synchronization information; or the terminal device determines that the time synchronization value of the candidate beam is the time synchronization information; or the terminal device determines a time synchronization offset value based on the time synchronization value of the first beam and the time synchronization value of the previous serving beam, where the timing offset value is the time synchronization information; or the terminal device determines the time synchronization offset value based on the time synchronization value of the first beam and the time synchronization value of the candidate beam, where the time synchronization offset value is the time synchronization information. This is not specifically limited herein.

In this embodiment of this application, the timing offset value may be a difference between time synchronization values of two beams, or may be a difference between arrival time for first paths of reference signals corresponding to the two beams.

703: The terminal device determines a timing advance value.

The terminal device determines the timing advance value TA based on the time synchronization information. The terminal device may adjust a timing advance value of an uplink signal based on the timing advance value.

In a possible implementation, the second beam is the candidate beam, and the time synchronization information is the time synchronization offset value determined by the terminal device based on the time synchronization value of the first beam and the time synchronization value of the candidate beam. In this case, the terminal device may determine the timing advance value based on the time synchronization offset value and the time synchronization value of the first beam. The terminal device may adjust the timing advance value of the uplink signal based on the timing advance value.

In a possible implementation, the second beam is the previous serving beam, and the time synchronization information is the time synchronization offset value determined by the terminal device based on the time synchronization value of the first beam and the time synchronization value of the previous serving beam. In this case, the terminal device may determine the timing advance value based on the time synchronization offset value and the time synchronization value of the second beam. The terminal device may adjust the timing advance value of the uplink signal based on the timing advance value.

In this embodiment of this application, the terminal device may determine the timing advance value based on the time synchronization information. Alternatively, the terminal device may not determine the timing advance value. In other words, step 503 may not be performed in this embodiment of this application. This is not specifically limited herein.

704: The terminal device sends the indication information to the access network device.

If the time synchronization information meets a preset condition, the terminal device sends the indication information to the access network device. The indication information indicates that the time synchronization information meets the preset condition.

In an optional implementation, when the second beam is the candidate beam, if a difference between the time synchronization value of the second beam and the time synchronization value of the current serving first beam in the terminal device is greater than a preset value, that is, exceeds an adjustment range, and the second beam is a beam with highest reference signal received power (Reference Signal Received Power, RSRP) or a highest signal to interference plus noise ratio (Signal to Interference plus Noise Ratio, SINR) in a candidate beam set, the terminal device sends the indication information to the access network device. The indication information indicates that the difference between the time synchronization value of the candidate beam and the time synchronization value of the current serving first beam in the terminal device is greater than the preset value, that is, exceeds the adjustment range. The indication information may include the time synchronization value of the candidate beam.

In an optional implementation, when a difference between the time synchronization value of the current serving first beam and the previous serving beam in the terminal device is greater than the preset value, that is, exceeds the adjustment range, and the first beam is a beam with highest reference signal received power (Reference Signal Received Power, RSRP) or a highest signal to interference plus noise ratio (Signal to Interference plus Noise Ratio, SINR) in a beam set, the terminal device sends the indication information to the access network device. The indication information indicates that the time synchronization value of the first beam is greater than the preset value, and the indication information may include the time synchronization value of the first beam.

In an optional implementation, if the time synchronization information is the timing offset value or the timing advance value, and the timing offset value or the timing advance value is greater than the preset value, the terminal device sends the indication information to the access network device. The indication information indicates that the timing offset value or the timing advance value is greater than the preset value, and may include the timing offset value or the timing advance value.

In this embodiment of this application, when the time synchronization information is the time synchronization offset value or the timing advance value, the terminal device sends the indication information to the access network device after determining that the time synchronization offset value or the timing advance value is greater than the preset value. Alternatively, the terminal device may directly send the indication information to the access network device without determining whether the time synchronization offset value or the timing advance value is greater than the preset value. The indication information may include the timing offset value or the timing advance value. This is not specifically limited herein.

In this embodiment of this application, if the terminal device has a tracking reference signal (tracking reference signal, TRS) resource preconfigured by the access network device, a plurality of TRS resources include a plurality of reference signals that are in a one-to-one correspondence with a plurality of beams, one TRS actually includes a group of CSI-RS resources, a plurality of CSI-RS resources may be sent by a same beam, and a time synchronization value of at least one of the plurality of beams corresponding to the plurality of reference signals is greater than the preset value, the terminal device sends the indication information to the access network device. The indication information may further include a reportConfig ID, a reportConfig ID pair, or an ID of a corresponding reference signal.

In this embodiment of this application, if the terminal device has the tracking reference signal (tracking reference signal, TRS) resource preconfigured by the access network device, the plurality of TRS resources include the plurality of reference signals corresponding to the beam, and time synchronization values of two of the plurality of beams corresponding to the plurality of reference signals are greater than the preset value, the terminal device sends the indication information to the access network device. The indication information may further include the two beams and a difference between the corresponding time synchronization values.

In this embodiment of this application, if the second beam is the candidate beam, the terminal device may send the indication information to the access network device by using a UCI resource preconfigured for the access network device, or the terminal device may send the indication information to the access network device by using a MAC-CE. This is not specifically limited herein.

In this embodiment of this application, if the second beam is the previous serving beam, the terminal device may send the indication information to the access network device by using a dedicated random resource preconfigured for the access network device. This is not specifically limited herein.

705: The terminal device receives an adjustment signal sent by the access network device.

The terminal device receives the adjustment signal sent by the access network device. The adjustment signal indicates the terminal device to adjust the timing of the uplink signal.

Specifically, after receiving the indication information sent by the terminal device, the access network device determines a demodulation signal based on the indication information. The access network device determines the timing advance value TA based on the time synchronization information. The access network device may adjust the timing advance value of the uplink signal based on the timing advance value.

In a possible implementation, the time synchronization information includes the timing advance value determined by the terminal device, and the access network device may alternatively determine the timing advance value based on the time synchronization information. In this case, the adjustment signal may indicate the terminal device to adjust the timing advance value of the uplink signal based on the timing advance value, or may indicate that the access network device learns of the timing advance value determined by the terminal device.

In a possible implementation, the second beam is the candidate beam, and the time synchronization information is the time synchronization offset value determined by the terminal device based on the time synchronization value of the first beam and the time synchronization value of the candidate beam. In this case, the access network device may determine the timing advance value based on the time synchronization offset value and the time synchronization value of the first beam. The terminal device may adjust the timing advance value of the uplink signal based on the timing advance value.

In a possible implementation, the second beam is the previous serving beam, and the time synchronization information is the time synchronization offset value determined by the terminal device based on the time synchronization value of the first beam and the time synchronization value of the previous serving beam. In this case, the access network device may determine the timing advance value based on the time synchronization offset value and the time synchronization value of the second beam. The terminal device may adjust the timing advance value of the uplink signal based on the timing advance value.

Specifically, the terminal device may receive a TCI state indication sent by the access network device, such as a base station. A plurality of TA adjustment values corresponding to the TCI state indication are preconfigured on the terminal device. For example, the base station may configure an associated TA adjustment value for one TCI state by RRC signaling or MAC signaling. Alternatively, the base station may dynamically associate the TCI state with the TA adjustment value by MAC-CE signaling. This method introduces the new signaling, but has a more flexible implementation.

After receiving the TCI state indication, the terminal device determines the TA adjustment value corresponding to the TCI state indication based on the TCI state indication. Then, the terminal device determines a new TA value based on a sum of the TA adjustment value and an original TA value.

The terminal device receives the adjustment signal sent by the access network device, and the adjustment signal includes a target TRS. The target TRS is a TRS resource location that is determined by the access network device by adding a preset offset value to a TRS in frequency domain in the TRS resource.

As shown in FIG. 6, in this embodiment of this application, if the terminal device has the tracking reference signal (tracking reference signal, TRS) resource preconfigured by the access network device, the TRS resource includes the plurality of reference signals corresponding to the beam, and the time synchronization information meets the preset condition, the access network device generates the target TRS by adding the preset offset value to an original TRS in frequency domain in the TRS resource. Correspondingly, when the terminal device sends the indication information to the access network device, the indication information further indicates the access network device to send the target TRS to the terminal device, that is, the access network device configures a new TRS resource for the terminal device. The TRS resource may be in a preset or preconfigured slot, and the TRS resource may follow the preset or preconfigured time.

Specifically, as shown in FIG. 6, the access network device preconfigures one additional aperiodic TRS resource for the terminal device. The TRS resource is a signaling-based resource. To be specific, the TRS resource is associated with the indication information sent by the terminal device to the access network device. The terminal device sends the indication information to the access network device if the time synchronization information meets the preset condition. The indication information further indicates the access network device to configure the new TRS resource for the terminal device. The access network device may add one frequency domain offset value to an ID corresponding to a configured TRS resource set based on the indication information sent by the terminal device. For example, an offset of two subcarriers or two resource elements (resource elements, REs) indicates a group of new TRS resources. Then, the terminal device performs joint processing on a plurality of groups of TRS resources on a same time domain OFDM symbol. The plurality of groups of TRS resources include the configured TRS and the newly configured TRS. After the terminal device sends the indication information to the access network device, the indication information indicates the access network device to configure the new TRS resource for the terminal device. The terminal device may learn that the TRS resource may be sent after x slots or y milliseconds, that is, the newly added TRS may be measured after the x slots or y milliseconds, x and y may be predefined or preconfigured values.

The following describes the terminal device in this embodiment of this application. Refer to FIG. 8. An embodiment of this application provides a terminal device 800. The terminal device may be the terminal device in FIG. 5, and the terminal device 800 includes the following two modules.

A determining module 801 is configured to determine time synchronization information based on a time synchronization value of a first beam and a time synchronization value of a second beam. The second beam is a candidate beam or a previous serving beam, and the first beam is a current serving beam. For a specific implementation, refer to step 502 in the embodiment shown in FIG. 5: The terminal device determines time synchronization information. Details are not described herein.

A sending module 802 is configured to: if the time synchronization information meets a preset condition, the terminal device sends indication information to an access network device. The indication information indicates that the time synchronization information meets the preset condition. For a specific implementation, refer to step 503 in the embodiment shown in FIG. 5: The terminal device sends the indication information to the access network device. Details are not described herein.

In a possible implementation, if the second beam is the candidate beam, the sending module 802 is specifically configured to: if the second beam is a beam with highest reference signal received power RSRP or a highest signal to interference plus noise ratio SINR in a candidate beam set, and the time synchronization value of the second beam meets the preset condition, the terminal device reports, to the access network device, that the time synchronization value of the second beam meets the preset condition. For a specific implementation, refer to step 503 in the embodiment shown in FIG. 5: The terminal device sends the indication information to the access network device. Details are not described herein.

In a possible implementation, if the second beam is the previous serving beam, the sending module 802 is specifically configured to: if the first beam is a beam with highest RSRP or a highest SINR in a beam set, and the time synchronization value of the first beam meets the preset condition, the terminal device reports, to the access network device, that the time synchronization value of the first beam meets the preset condition. For a specific implementation, refer to step 503 in the embodiment shown in FIG. 5: The terminal device sends the indication information to the access network device. Details are not described herein.

In this embodiment of this application, the terminal device 800 further includes a receiving module 803, configured to receive a tracking reference signal TRS resource preconfigured by the access network device. The TRS resource includes a plurality of reference signals corresponding to a plurality of beams. For a specific implementation, refer to step 504 in the embodiment shown in FIG. 5: The terminal device receives an adjustment signal sent by the access network device. Details are not described herein.

In a possible implementation, the sending module 802 is further specifically configured to: if a time synchronization value of at least one of the plurality of beams corresponding to the plurality of reference signals meets the preset condition, the terminal device sends the indication information to the access network device. The indication information includes a reference signal index corresponding to the at least one beam. For a specific implementation, refer to step 503 in the embodiment shown in FIG. 5: The terminal device sends the indication information to the access network device. Details are not described herein.

In a possible implementation, the sending module 802 is specifically configured to: if a difference between time synchronization values of two of the plurality of beams corresponding to the plurality of reference signals meets the preset condition, the terminal device sends the indication information to the access network device. The indication information includes identifiers of the two beams or the difference between the time synchronization values. For a specific implementation, refer to step 503 in the embodiment shown in FIG. 5: The terminal device sends the indication information to the access network device. Details are not described herein.

In this embodiment, the terminal device may perform the operation performed by the terminal device in any one of the foregoing embodiments shown in FIG. 5. Details are not described herein.

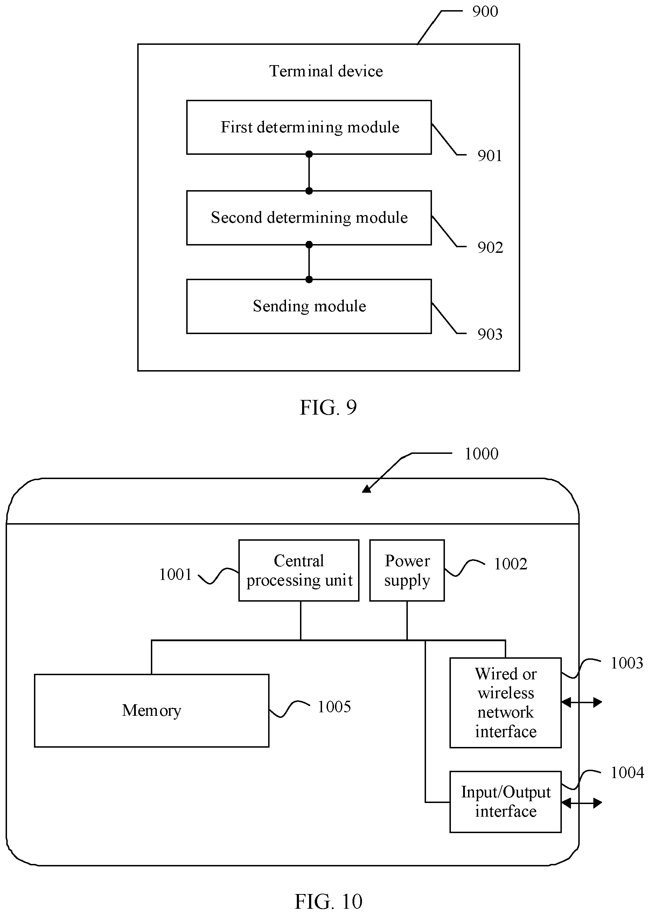

The following describes the terminal device in this embodiment of this application. Refer to FIG. 9. An embodiment of this application provides a terminal device 900. The terminal device may be the terminal device in FIG. 7, and the terminal device 900 includes the following three modules.

A first determining module 901 is configured to determine a time synchronization offset value based on a time synchronization value of a first beam and a time synchronization value of a second beam. The second beam is a candidate beam or a previous serving beam, and the first beam is a current serving beam. For a specific implementation, refer to step 702: The terminal device determines time synchronization information in the embodiment shown in FIG. 7. Details are not described herein.

The first determining module 901 is specifically configured to: determine that a difference between the time synchronization value of the first beam and the time synchronization value of the second beam is the time synchronization offset value; or determine that a difference between arrival time for first paths of two reference signals corresponding to the first beam and the second beam is the time synchronization offset value. For a specific implementation, refer to step 702 in the embodiment shown in FIG. 7: The terminal device determines time synchronization information. Details are not described herein.

A second determining module 902 is configured to determine a timing advance value based on the time synchronization offset value. For a specific implementation, refer to step 703 in the embodiment shown in FIG. 7: The terminal device determines a timing advance value. Details are not described herein.

In a possible implementation, if the second beam is the candidate beam, the second determining module is specifically configured to determine that a sum of the time synchronization offset value and the time synchronization value of the first beam is the timing advance value. For a specific implementation, refer to step 703 in the embodiment shown in FIG. 7: The terminal device determines a timing advance value. Details are not described herein.

In a possible implementation, if the second beam is the previous serving beam, the second determining module is specifically configured to determine that a sum of the time synchronization offset value and downlink timing of the previous serving beam is a target uplink timing. For a specific implementation, refer to step 703 in the embodiment shown in FIG. 7: The terminal device determines a timing advance value. Details are not described herein.

A sending module 903 is configured to send indication information to the access network device. The indication information includes the timing advance value. For a specific implementation, refer to step 704 in the embodiment shown in FIG. 7: The terminal device sends the indication information to the access network device. Details are not described herein.

In this embodiment, the terminal device may perform the operation performed by the terminal device in any one of the foregoing embodiments shown in FIG. 7. Details are not described herein.

FIG. 10 is a schematic diagram of a structure of a terminal device according to an embodiment of this application. The terminal device 1000 may include one or more central processing units (central processing units, CPUs) 1001 and a memory 1005. The memory 1005 stores one or more applications or data.

The memory 1005 may be a volatile memory or a persistent memory. The program stored in the memory 1005 may include one or more modules, and each module may include a series of instruction operations for the terminal device. Further, the central processing unit 1001 may be configured to communicate with the memory 1005, and perform the series of instruction operations in the memory 1005 in the terminal device 1000.

The central processing unit 1001 is configured to execute a computer program in the memory 1005, so that the terminal device 1000 is configured to: determine a time synchronization information based on a time synchronization value of a first beam and a time synchronization value of a second beam, where the second beam is a candidate beam or a previous serving beam, and the first beam is a current serving beam; and send indication information to the access network device if the time synchronization information meets the preset condition, where the indication information indicates that the time synchronization information meets the preset condition. For a specific implementation, refer to steps 501 to 504 in the embodiment shown in FIG. 5. Details are not described herein.

The terminal device 1000 may further include one or more power supplies 1002, one or more wired or wireless network interfaces 1003, one or more input/output interfaces 1004, and/or one or more operating systems such as Windows ServerTM, Mac OS XTM, UnixTM, LinuxTM, and FreeBSDTM.

The terminal device 1000 may perform the operation performed by the terminal device in the embodiment shown in FIG. 5. Details are not described herein.

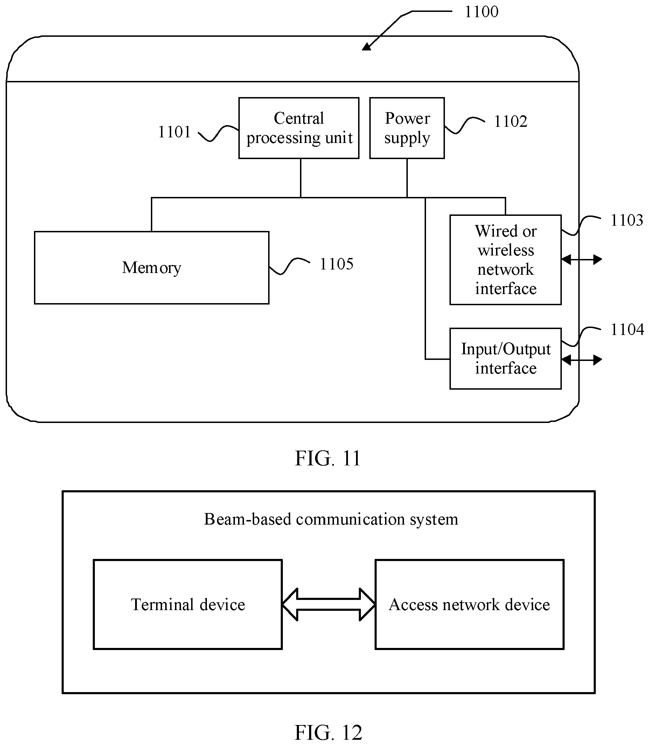

FIG. 11 is a schematic diagram of a structure of a terminal device according to an embodiment of this application. The terminal device 1100 may include one or more central processing units (central processing units, CPUs) 1101 and a memory 1105. The memory 1105 stores one or more applications or data.

The memory 1105 may be a volatile memory or a persistent memory. The program stored in the memory 1105 may include one or more modules, and each module may include a series of instruction operations for the terminal device. Further, the central processing unit 1101 may be configured to communicate with the memory 1105, and perform the series of instruction operations in the memory 1105 in the terminal device 1100.

The central processing unit 1101 is configured to execute a computer program in the memory 1105, so that the terminal device 1100 is configured to: determine a time synchronization offset value based on a time synchronization value of a first beam and a time synchronization value of a second beam, where the second beam is a candidate beam or a previous serving beam, and the first beam is a current serving beam; determine a timing advance value based on the time synchronization offset value; and send indication information to the access network device, where the indication information includes the timing advance value. For a specific implementation, refer to steps 701 to 705 in the embodiment shown in FIG. 7. Details are not described herein.

The terminal device 1100 may further include one or more power supplies 1102, one or more wired or wireless network interfaces 1103, one or more input/output interfaces 1104, and/or one or more operating systems such as Windows ServerTM, Mac OS XTM, UnixTM, LinuxTM, and FreeBSDTM.

The terminal device 1100 may perform the operation performed by the terminal device in the embodiment shown in FIG. 7. Details are not described herein.

FIG. 12 is a schematic diagram of a structure of a beam-based communication system according to an embodiment of this application. The beam-based communication system 1200 may include a terminal device 1201 and an access network device 1202. The terminal device 1201 and the access network device 1202 may perform the beam time synchronization methods shown in FIG. 5 and FIG. 7. For specific implementations, refer to steps 501 to 504 in the embodiment shown in FIG. 5 and steps 701 to 705 in the embodiment shown in FIG. 7. Details are not described herein.

It may be clearly understood by a person skilled in the art that, for a convenient and brief description, for a detailed working process of the foregoing system, apparatus, and unit, refer to a corresponding process in the foregoing method embodiments, and details are not described herein.

In the several embodiments provided in this application, it may be understood that the disclosed system, apparatus, and method may be implemented in other manners. For example, the described apparatus embodiment is only an example. For example, division into units is only a logical function division, and another division manner may be used in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or another form.

The units described as separate parts may or may not be physically separate, and parts displayed as units may or may not be physical units, and may be located in one position, or may be distributed on a plurality of network units. Some or all of the units may be selected depending on an actual requirement to achieve the objectives of the solutions in the embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software function unit.

When the integrated unit is implemented in the form of the software function unit and sold or used as an independent product, the integrated unit may be stored in a computer-readable storage medium. Based on this understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, an access network device, or the like) to perform all or some of the steps of the methods described in embodiments of this application. The foregoing storage medium includes any medium that can store program code, such as a USB flash drive, a removable hard disk, a read-only memory (ROM, read-only memory), a random access memory (RAM, random access memory), a magnetic disk, or an optical disc.

## Claims

1. A beam time synchronization method, wherein the method comprises:
determining, by a terminal device, time synchronization information based on a time synchronization value of a first beam and a time synchronization value of a second beam, wherein the second beam is a candidate beam or a previous serving beam, and the first beam is a current serving beam; and
sending, by the terminal device, indication information to an access network device if the time synchronization information meets a preset condition, wherein the indication information indicates that the time synchronization information meets the preset condition.

2. The method according to claim 1, wherein the second beam is the candidate beam, and the sending, by the terminal device, indication information to an access network device if the time synchronization information meets a preset condition comprises:
if the second beam is a beam with highest reference signal received power RSRP or a highest signal to interference plus noise ratio SINR in a candidate beam set, and the time synchronization value of the second beam meets the preset condition, reporting, by the terminal device to the access network device, that the time synchronization value of the second beam meets the preset condition.

3. The method according to claim 1, wherein the second beam is the previous serving beam, and the sending, by the terminal device, indication information to an access network device if the time synchronization information is greater than a preset value comprises:
if the first beam is a beam with highest RSRP or a highest SINR in a beam set, and the time synchronization value of the first beam meets the preset condition, reporting, by the terminal device to the access network device, that the time synchronization value of the first beam meets the preset condition.

4. The method according to any one of claims 1 to 3, wherein before the determining, by a terminal device, time synchronization information based on a time synchronization value of a first beam and a time synchronization value of a second beam, the method further comprises:
receiving, by the terminal device, a tracking reference signal TRS resource preconfigured by the access network device, wherein the TRS resource comprises a plurality of reference signals corresponding to a plurality of beams.

5. The method according to claim 4, wherein the sending, by the terminal device, indication information to an access network device if the time synchronization information meets a preset condition comprises:
sending, by the terminal device, the indication information to the access network device if a time synchronization value of at least one of the plurality of beams corresponding to the plurality of reference signals meets the preset condition, wherein the indication information comprises a reference signal index corresponding to the at least one beam.

6. The method according to claim 5, wherein the reference signal index comprises a reportConfig ID of at least one reference signal or an ID of the at least one reference signal.

7. The method according to claim 4, wherein the sending, by the terminal device, indication information to an access network device if the time synchronization information meets a preset condition comprises:
sending, by the terminal device, the indication information to the access network device if a difference between time synchronization values of two of the plurality of beams corresponding to the plurality of reference signals meets the preset condition, wherein the indication information comprises identifiers of the two beams or the difference between the time synchronization values.

8. The method according to any one of claims 4 to 7, wherein the indication information further indicates the access network device to send an adjustment signal to the terminal device, the adjustment signal comprises a target TRS, and the target TRS is a TRS resource location that is determined by the access network device by adding a preset offset value to a TRS in frequency domain in the TRS resource.

9. A beam timing advance synchronization method, wherein the method comprises:
determining, by a terminal device, a time synchronization offset value based on a time synchronization value of a first beam and a time synchronization value of a second beam, wherein the second beam is a candidate beam or a previous serving beam, and the first beam is a current serving beam;
determining, by the terminal device, a timing advance value based on the time synchronization offset value; and
sending, by the terminal device to an access network device, indication information, wherein the indication information comprises the timing advance value.

10. The method according to claim 9, wherein the determining, by a terminal device, a time synchronization offset value based on a time synchronization value of a first beam and a time synchronization value of a second beam comprises:
determining, by the terminal device, that a difference between the time synchronization value of the first beam and the time synchronization value of the second beam is the time synchronization offset value; or
determining, by the terminal device, that a difference between arrival time for first paths of two reference signals corresponding to the first beam and the second beam is the time synchronization offset value.

11. The method according to claim 9 or 10, wherein the second beam is the candidate beam, and the determining, by the terminal device, a target uplink timing based on the time synchronization offset value comprises:
determining, by the terminal device, that a sum of the time synchronization offset value and downlink timing of the first beam is the timing advance value.

12. The method according to claim 9 or 10, wherein the second beam is the previous serving beam, and the determining, by the terminal device, a timing advance value based on the time synchronization offset value comprises:
determining, by the terminal device, that a sum of the time synchronization offset value and downlink timing of the previous serving beam is the timing advance value.

13. A beam time synchronization method, wherein the method comprises:
receiving, by a terminal device, configuration information sent by an access network device, wherein the configuration information comprises an association relationship between TCI state information and TAs timing advances of at least two time synchronization values.

14. The method according to 13, wherein the method further comprises:
determining, by the terminal device, a TA adjustment value corresponding to the TCI state information based on the TCI state information; and
determining, by the terminal device, a new TA based on the TA adjustment value and the correspondence.

15. The method according to claim 14, wherein the determining, by the terminal device, a new TA based on the TA adjustment value and the correspondence comprises:
determining, by the terminal device, that a sum of the TA adjustment value and an original TA value is a value of the new TA.

16. The method according to any one of claims 13 to 15, wherein the configuration information is carried in RRC signaling, and the association relationship is carried in MAC-CE signaling.

17. A terminal device, wherein the terminal device comprises:
a determining module, configured to determine time synchronization information based on a time synchronization value of a first beam and a time synchronization value of a second beam, wherein the second beam is a candidate beam or a previous serving beam, and the first beam is a current serving beam; and
a sending module, configured to send, by the terminal device, indication information to an access network device if the time synchronization information meets a preset condition, wherein the indication information indicates that the time synchronization information meets the preset condition.

18. The terminal device according to claim 17, wherein the second beam is the candidate beam, and the sending module is specifically configured to:
if the second beam is a beam with highest reference signal received power RSRP or a highest signal to interference plus noise ratio SINR in a candidate beam set, and the time synchronization value of the second beam meets the preset condition, report, by the terminal device to the access network device, that the time synchronization value of the second beam meets the preset condition.

19. The terminal device according to claim 17, wherein the second beam is the previous serving beam, and the sending module is specifically configured to:
if the first beam is a beam with highest RSRP or a highest SINR in a beam set, and the time synchronization value of the first beam meets the preset condition, report, by the terminal device to the access network device, that the time synchronization value of the first beam meets the preset condition.

20. The terminal device according to any one of claims 17 to 19, wherein the terminal device further comprises:
a receiving unit, configured to receive a tracking reference signal TRS resource preconfigured by the access network device, wherein the TRS resource comprises a plurality of reference signals corresponding to a plurality of beams.

21. The terminal device according to claim 20, wherein the sending module is specifically configured to:
send, by the terminal device, the indication information to the access network device if a time synchronization value of at least one of the plurality of beams corresponding to the plurality of reference signals meets the preset condition, wherein the indication information comprises a reference signal index corresponding to the at least one beam.

22. The terminal device according to claim 20, wherein the sending module is specifically configured to:
send, by the terminal device, the indication information to the access network device if a difference between time synchronization values of two of the plurality of beams corresponding to the plurality of reference signals meets the preset condition, wherein the indication information comprises identifiers of the two beams or the difference between the time synchronization values.

23. The terminal device according to any one of claims 20 to 22, wherein the indication information further indicates the access network device to send an adjustment signal to the terminal device, the adjustment signal comprises a target TRS, and the target TRS is a TRS resource location that is determined by the access network device by adding a preset offset value to a TRS in frequency domain in the TRS resource.

24. A terminal device, wherein the terminal device comprises:
a first determining module, configured to determine a time synchronization offset value based on a time synchronization value of a first beam and a time synchronization value of a second beam, wherein the second beam is a candidate beam or a previous serving beam, and the first beam is a current serving beam;
a second determining module, configured to determine a timing advance value based on the time synchronization offset value; and
a sending module, configured to send indication information to an access network device, wherein the indication information comprises the timing advance value.

25. The terminal device according to claim 24, wherein the first determining module is further configured to:
determine, by the terminal device, that a difference between the time synchronization value of the first beam and the time synchronization value of the second beam is the time synchronization offset value; or
determine, by the terminal device, that a difference between arrival time for first paths of two reference signals corresponding to the first beam and the second beam is the time synchronization offset value.

26. The terminal device according to claim 24 or 25, wherein the second beam is the candidate beam, and the second determining module is configured to:
determine that a sum of the time synchronization offset value and the time synchronization value of the first beam is the timing advance value.

27. The terminal device according to claim 24 or 25, wherein the second beam is the previous serving beam, and the second determining module is configured to:
determine that a sum of the time synchronization offset value and downlink timing of the previous serving beam is the target uplink timing.

28. A terminal device, wherein the terminal device comprises:
a receiving module, configured to receive configuration information sent by an access network device, wherein the configuration information comprises an association relationship between TCI state information and TAs timing advances of at least two time synchronization values.

29. The terminal device according to 28, wherein the terminal device further comprises:
a first determining module, configured to determine, a TA adjustment value corresponding to the TCI state information based on the TCI state information; and
a second determining module, configured to determine a new TA based on the TA adjustment value and the correspondence.

30. The terminal device according to claim 29, wherein the second determining module is specifically configured to:
determine that a sum of the TA adjustment value and an original TA value is a value of the new TA.

31. The terminal device according to any one of claims 28 to 30, wherein the configuration information is carried in RRC signaling, and the association relationship is carried in MAC-CE signaling.

32. A beam-based communication system, wherein the beam-based communication system comprises the terminal device according to any one of claims 17 to 31 and the access network device according to any one of claims 17 to 31.
